# EUROPÄISCHE PATENTANMELDUNG

(11) **EP 3 693 342 A1**
(43) Veröffentlichungstag der Anmeldung: **12.08.2020**
(21) Anmeldenummer: 19156136.4
(22) Anmeldetag: 08.02.2019
(51) Int. Cl.: C02F 1/00, G06N 3/02, C02F 3/12

(54) **KALIBRIERUNG EINES SIMULATIONSMODELLS EINER ABWASSERBEHANDLUNGSANLAGE**

(71) Anmelder: Siemens Aktiengesellschaft, 80333 München (DE)
(72) Erfinder: Brandstetter, Veronika, 81673 München (DE); Garhammer, Andreas, 84367 Reut (DE); Wehrstedt, Jan Christoph, 81829 München (DE)

(57) **Zusammenfassung**

Die vorliegende Erfindung betrifft ein automatisiertes Verfahren zur Ermittlung von Kalibrierungswerten (7) für Parameter eines Simulationsmodells einer Abwasserbehandlungsanlage (1), mit den Schritten:
- Bereitstellen von Anfangswerten der Parameter (8), wobei die Anfangswerte der Parameter (8) diskrete Werte sind und jeweils eine obere Schranke und eine untere Schranke aufweisen,
- Bestimmen von diskreten Simulationszeitreihen (9) durch das Simulationsmodell für Parameterkombinationen (81) über eine vorgebbare Zeitspanne (T), wobei die Parameterkombinationen (81) Kombinationen der Anfangswerte der Parameter (8) darstellen,
- Trainieren eines Klassifikationsalgorithmus (6) mit den Simulationszeitreihen (9) und den zugehörigen Parameterkombinationen (81) derart, dass unbekannte Simulationszeitreihen (9) bekannten Parameterkombinationen (81) zuordenbar sind,
- Messen von Beobachtungswerten (5) über die Zeitspanne (T),
- Eingabe der Beobachtungszeitreihe (51) in den trainierten Klassifikationsalgorithmus (61), und
- Ermittlung einer zu der Beobachtungszeitreihe (51) passenden Parameterkombination (81) als Kalibrierungswerte (7) für die Parameter des Simulationsmodells durch den trainierten Klassifikationsalgorithmus (61).

Die Erfindung betrifft außerdem ein System (2) zur Ausführung des Verfahrens, ein Computerprogrammprodukt und ein computerlesbares Medium.

## Beschreibung

### HINTERGRUND DER ERFINDUNG

### Gebiet der Erfindung

Die vorliegende Erfindung betrifft ein automatisiertes Verfahren zur Ermittlung von Kalibrierungswerten für Parameter eines Simulationsmodells einer Abwasserbehandlungsanlage, ein System zur Ausführung des Verfahrens, ein Computerprogrammprodukt und ein computerlesbares Medium. Die Erfindung kann insbesondere zur Kalibrierung eines Activated Sludge Models (ASM) verwendet werden.

### Beschreibung des Stands der Technik

Kläranlagen sind komplexe verfahrenstechnische Anlagen, in denen viele komplexe Prozesse für die Wasseraufbereitung ablaufen. Durch diese Prozesse wird aus ankommendem Abwasser mit unterschiedlicher Zusammensetzung aufbereitetes Wasser mit garantierten Qualitätsmaßen am Ausgang der Kläranlage. Der aufwändigste Aufbereitungsteil findet im Belebungsbecken statt, wobei mit großem Energieaufwand Sauerstoff eingetragen wird und unter Verwendung von organischem Belebungsschlamm die Stickstoffanteile im Abwasser reduziert werden. Dafür ist ein gutes Prozessverständnis nötig. Hierzu kann Simulation eingesetzt werden, welche auf die Activated Sludge Model (ASM) Modellierung [Mogens, Henze; Gujer Willi; Mino Takashi; van Loosdrecht Mark (2000). Activated sludge models ASM1, ASM2, ASM2d and ASM3. London: IWA publishing. ISBN 1-900222-24-8.] aufsetzt, von der verschiedene Varianten existieren.

Um Simulationen zur Beschreibung oder Vorhersage des Prozessverhaltens im Belebungsbecken zu verwenden, müssen die Modelle erst basierend auf Messdaten kalibriert werden. Dies ist ein aufwendiges Vorgehen, da die Modelle viele Konzentrationen (beim ASM1 z.B. 13 verschiedene Konzentrationen) und viele kinematische und stöchiometrische Parameter beinhalten. Die Konzentrationen der im Modell abgebildeten Stoffe sind in der Regel nicht alle direkt messbar; existieren Messwerte, liegen sie gewöhnlich in verschiedenen Zeitskalen vor: so gibt es Sensoren für Sauerstoff und für die Stickstoffverbindungen, die kontinuierlich die jeweiligen Konzentrationen messen, wohingegen die Schlammanteile oft erst in Laboruntersuchungen festgestellt werden können.

Für eine Kalibrierung des ASM Modells bedeutet dies einen hohen Aufwand, hohes Prozessverständnis und viel Zeit.

### ZUSAMMENFASSUNG DER ERFINDUNG

Die Aufgabe der Erfindung besteht darin, eine Lösung zur Verbesserung des Stands der Technik bereitzustellen, die zur Kalibrierung des ASM Modells eingesetzt werden kann.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung.

Ein Aspekt der Erfindung besteht darin, ein automatisiertes Verfahren zur Ermittlung von Kalibrierungswerten für kinematische und stöchiometrische Parameter eines Simulationsmodells einer Abwasserbehandlungsanlage mittels Klassifikationsalgorithmus bereitzustellen, wobei der Klassifikationsalgorithmus trainiert wurde, gemessenen Beobachtungszeitreihen Parameterkombinationen zuzuordnen.

Die Erfindung kann in verschiedene Arten von Abwasserbehandlungsanlage oder auch als Kläranlagen bezeichenbar, Anwendung finden. Darunter zum Beispiel: Isolierte Tanks, bei denen zur Kalibrierung Zu- und Abflüsse abgestellt werden; Becken mit mehreren Zonen, welche durch Hintereinanderschalten verschiedener Einzelbecken modelliert werden, bei denen noch ein Stofftransport durch das System angeboten wird; Systeme, bei denen ein Zufluss existiert; und Systeme mit Rezirkulation.

Die Erfindung beansprucht ein automatisiertes Verfahren zur Ermittlung von Kalibrierungswerten für Parameter eines Simulationsmodells einer Abwasserbehandlungsanlage. Das Verfahren weist die folgenden Schritte auf:
- Bereitstellen von Anfangswerten der Parameter, wobei die Anfangswerte der Parameter diskrete Werte sind und jeweils eine obere Schranke und eine untere Schranke aufweisen,
- Bestimmen von diskreten Simulationszeitreihen durch das Simulationsmodell für Parameterkombinationen über eine vorgebbare Zeitspanne, wobei die Parameterkombinationen Kombinationen der Anfangswerte der Parameter darstellen,
- Trainieren eines Klassifikationsalgorithmus mit den Simulationszeitreihen und den zugehörigen Parameterkombinationen derart, dass unbekannte Simulationszeitreihen bekannten Parameterkombinationen zuordenbar sind,
- Messen von Beobachtungswerten über die Zeitspanne
- Eingabe der Beobachtungszeitreihe in den Klassifikationsalgorithmus, und
- Ermittlung einer zu der Beobachtungszeitreihe passenden Parameterkombination als Kalibrierungswerte für die Parameter des Simulationsmodells durch den trainierten Klassifikationsalgorithmus.

Dabei sind die Parameter kinematische und stöchiometrische Parameter wie beispielsweise mögliche Konzentrationen von beispielsweise Sauerstoff, Stickstoffverbindungen wie Nitrate und Nitride, Klärschlamm und mögliche Reaktionsgeschwindigkeiten. Die Anfangswerte der Parameter werden in realistischen Bereichen bereitgestellt. Die obere und untere Schranke kann auch als Grenzwert und/ oder Schwellwert bezeichnet werden.

Dabei stellen bei dem Trainieren bzw. bei dem Initialisieren des Klassifikationsalgorithmus unterschiedliche Parameterkombination unterschiedliche Klassen dar bzw. unterschiedliche Parameterkombination entsprechen unterschiedlichen Klassen. Außerdem stellen bei dem Trainieren bzw. bei dem Initialisieren des Klassifikationsalgorithmus die Simulationszeitreihen die Eingangswerte des Klassifikationsalgorithmus dar.

Die gemessenen Beobachtungswerte stellen eine messbare Auswahl der Parameter dar. Die Abtastrate der Beobachtungszeitreihe entspricht dabei der Abtastrate der Simulationszeitreihe.

In einer weiteren Ausgestaltung können die Parameter Stoffkonzentrationen und/ oder Reaktionsgeschwindigkeiten und/ oder Verläufe von Stoffzufuhren in der Abwasserbehandlungsanlage sind.

Zum Lernen bzw. zum Trainieren oder Initialisieren des Klassifikationsalgorithmus werden hierzu die möglichen Anfangswerte der Parameter (mögliche Verfahrensparameter: Stoffkonzentrationen und/ oder Reaktionsgeschwindigkeiten) in sinnvollen Bereichen diskretisiert. Außerdem werden ggf. Verläufe für Sauerstoffzufuhren und Zuflüsse ebenfalls diskretisiert bereitgestellt. Dann wird für jeden Satz das ASM über einen festen Zeitraum simuliert. So werden Simulationszeitreihen erstellt. Die Simulationszeitreihen der Werte, die sich einfach messen lassen, werden anschließend den Anfangswerten der Parameter oder Kombinationen aus diesen zugeordnet. Die Anfangswerte der Parameter oder deren Kombinationen stellen die Klassen des Klassifikationsalgorithmus und die Simulationszeitreihen die Eingangsdaten dar. Der Klassifikationsalgorithmus wird mit den Klassen und Eingangsdaten trainiert.

Ein Rechenkern oder eine Recheneinheit verwendet nun zeitliche Verläufe von Eingangsdaten zum Beispiel Beobachtungszeitreihe über einen Kalibrierungszeitraum und klassifiziert diese entsprechend dem Verfahren. Dadurch lassen sich Kalibrierungswerte für die Parameter des Simulationsmodells bestimmen.

Die genaue Umsetzung erfolgt nach dem folgenden Ansatz: Initialisierungsphase:
1) Bestimme für alle Anfangswerte der Parameter einen Gültigkeitsbereich durch eine obere und untere Schranke,
2) Diskretisiere den Raum der Anfangswerte der Parameter und simuliere für jede Kombination der Diskretisierungswerte das Simulationsmodell über eine Zeitspanne, und
3) Lerne einen Klassifizierungsalgorithmus, wobei die Simulationszeitreihen der in der Realität messbaren Größen im definierten Zeitraum mit einer definierten Abtastrate die Eingangswerte oder Eingangsdaten, und die Anfangswerte der Parameter die Klassifizierungswerte bzw. Klassen sind.

### Auswertephase:

1) Messe die Beobachtungswerte über den selben definierten Zeitraum wie die Simulationszeitreihen,
2) Extrahiere aus den Beobachtungswerten eine Zeitreihe, die die Abtastrate wie die Simulationszeitreihen hat, und
3) Werte den Klassifizierungsalgorithmus für die gemessenen Beobachtungswerte aus. Ergebnis sind die Kalibrierungswerte für die Parameter des Simulationsmodells der Abwasserbehandlungsanlage.

In einer weiteren Ausgestaltung können einer Parameterkombination mehrere korrespondierenden Simulationszeitreihen zugewiesen werden, welche im Bereich eines Systemrauschens voneinander abweichen.

Das hat den Vorteil, dass zur Verbesserung des Verfahrens zu einer Klasse/ einem Satz Anfangswerte der Parameter auch verschiedene Eingangsdatensätze für die Klassifikation/ Simulationszeitreihen zugeordnet werden können, die sich darin unterscheiden, dass sowohl die Anfangswerte der Parameter, wie auch die Simulationsdaten mit einem Rauschen versehen werden, um Messunsicherheiten auszugleichen.

In einer weiteren Ausgestaltung weist jede Parameterkombination, jeden Anfangsparameter genau einmal auf.

In einer weiteren Ausgestaltung ist das Simulationsmodell ein Activated Sludge Model (ASM) und enthält Massenbilanzen und/ oder ein hydraulisches Modell für einen Wassertransport.

In einer weiteren Ausgestaltung ist der Klassifikationsalgorithmus als neuronales Netz ausgebildet ist.

Als Alternativlösung kommen auch Kalibrierungsverfahren in Frage, die auf mathematischer Optimierung beruhen. Allerdings benötigen diese Optimierungen lange Rechenzeiten.

Die Erfindung beansprucht außerdem ein System aufweisend eine Recheneinheit (auch als Rechenkern bezeichenbar), wobei die Recheneinheit ausgebildet ist, ein Verfahren nach einem der vorhergehenden Ansprüche auszuführen.

Das hat den Vorteil, dass darüber hinaus zum Verfahren eine Recheneinheit gehört, welche entweder direkt in dem System (auch als Automatisierungssystem bezeichenbar) oder in einer Cloudlösung (z.B. als Mindsphere App) an das System (z. B. ein Supervisory Control and Data Acquisition (SCADA) System) bzw. die Beobachtungswerte und die resultierenden Beobachtungszeitreihen (oder auch als Messwerte bezeichenbar) angekoppelt ist.

Der Rechenkern dieser Lösung bzw. dieser Erfindung wird mit Zeitreihen der (Online-) Beobachtungswerten bzw. Beobachtungszeitreihe gefüttert. Basierend auf diesen Online-Beobachtungszeitreihen berechnet der Rechenkern Kalibrierungsdaten bzw. Kalibrierungswerte, welche dann als Input für Simulationen zur Vorhersage des Anlageverhaltens der Abwasserbehandlungsanlage verwendet werden können.

Hinter dem Rechenkern verbirgt sich die Verwendung eines lernenden Verfahrens bzw. eines Klassifizierungsalgorithmus wie z.B. eines neuronalen Netzes zur Klassifizierung.

In einer weiteren Ausgestaltung ist die Recheneinheit in einer Cloud ausgebildet.

In einer weiteren Ausgestaltung weist das System mindestens eine Sensoreinheit auf, die ausgebildet ist, Beobachtungswerte zu ermitteln.

Dies hat den Vorteil, dass das Verfahren über eine Sensoreinheit zum Messen von relevanten Stoffkonzentrationen (z.B. Sauerstoff oder Stickstoffverbindungen sowie Durchfluss) verfügt, welche in der Kläranlage/ Abwasserbehandlungsanlage fest installiert ist.

Die Erfindung beansprucht außerdem ein Computerprogrammprodukt, umfassend ein Computerprogramm, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Die Erfindung beansprucht außerdem ein computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Zusammenfasend kann gesagt werden, dass der wesentliche Aspekt der Erfindung darin liegt, dass eine Gesamtlösung aus Sensorik sowie einer Cloudlösung zur Kalibrierung des Belebungsbeckens einer Abwasserbehandlungsanlage für den Endanwender angeboten wird, während bisherige Ansätze, stark auf Erfahrung und reinem Ausprobieren durch Experten beruhten.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand von schematischen Zeichnungen ersichtlich.

Es zeigen
- Fig. 1: ein Verfahrensdiagramm und
- Fig. 2: ein Blockschaltbild.

### DETAILLIERTE BESCHREIBUNG DER ERFINDUNG

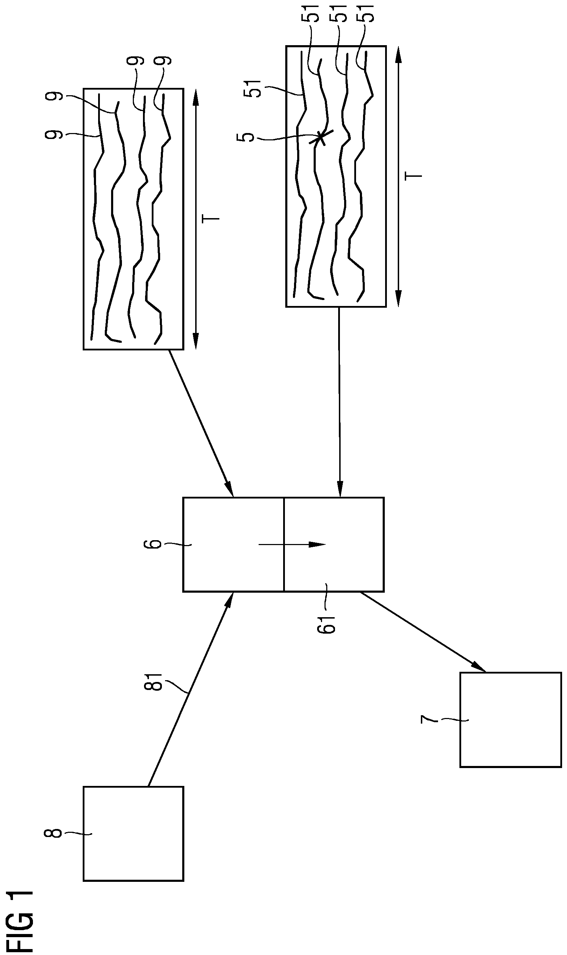

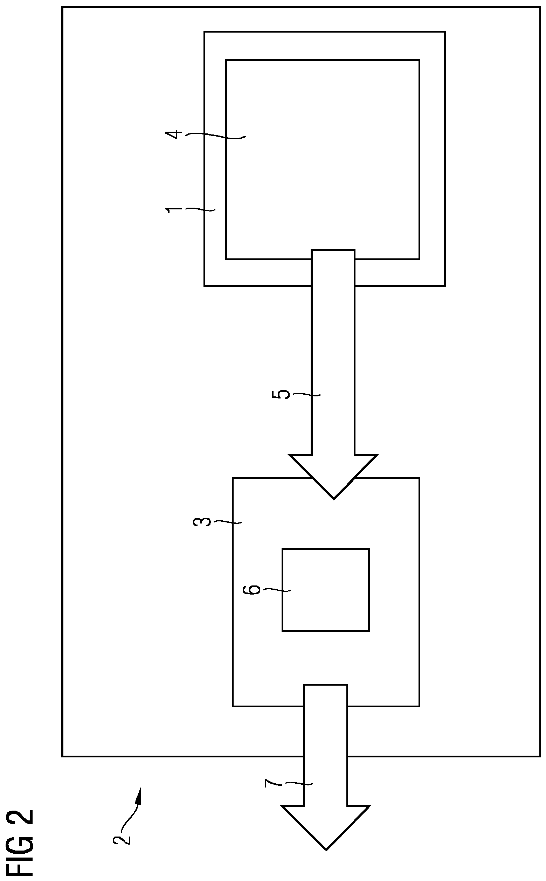

Fig. 1 zeigt ein Diagramm des erfindungsgemäßen Verfahrens. Das Verfahren beinhaltet die folgenden Schritte:
- Bereitstellen von Anfangswerten der Parameter 8, wobei die Anfangswerte der Parameter 8 diskrete Werte sind und jeweils eine obere Schranke und eine untere Schranke aufweisen,
- Bestimmen von diskreten Simulationszeitreihen 9 durch das Simulationsmodell für Parameterkombinationen 81 über eine vorgebbare Zeitspanne T, wobei die Parameterkombinationen 81 Kombinationen der Anfangswerte der Parameter 8 darstellen,
- Trainieren eines Klassifikationsalgorithmus 6 mit den Simulationszeitreihen 9 und den zugehörigen Parameterkombinationen 81 derart, dass mit dem trainierten Klassifikationsalgorithmus 61 unbekannte Simulationszeitreihen, d.h. später gemessene Beobachtungszeitreihen 5, bekannten Parameterkombinationen 81 zuordenbar sind,
- Messen von Beobachtungswerten 5 in- oder außerhalb einer Abwasserbehandlungsanlage (nur in Fig. 2 dargestellt) über die Zeitspanne T,
- Eingabe der Beobachtungszeitreihe 51 in den trainierten Klassifikationsalgorithmus 61, und
- Ermittlung einer zu der Beobachtungszeitreihe 51 passenden Parameterkombination 81 als Kalibrierungswerte 7 für die Parameter des Simulationsmodells durch den trainierten Klassifikationsalgorithmus 61.

Fig. 2 zeigt ein Blockschaltbild eines Systems 2 aufweisend eine Recheneinheit 3 (auch als Rechenkern bezeichenbar) und eine Sensoreinheit 4. Die Recheneinheit 3 ist ausgebildet, ein erfindungsgemäßes Verfahren auszuführen. Die Sensoreinheit 4 ist ausgebildet (Online-) Beobachtungswerte 5 in- oder außerhalb einer Abwasserbehandlungsanlage 1 zu ermitteln.

Die Recheneinheit 3 dieser Lösung bzw. dieser Erfindung wird mit Zeitreihen der Online-Beobachtungswerten 51 bzw. Beobachtungszeitreihe 51 gefüttert. Basierend auf diesen Beobachtungszeitreihe 51 berechnet die Recheneinheit 3 Kalibrierungsdaten 7 bzw. Kalibrierungswerte 7, welche dann als Input für Simulationen zur Vorhersage des Anlageverhaltens der Abwasserbehandlungsanlage verwendet werden können.

Hinter der Recheneinheit 3 verbirgt sich die Verwendung eines lernenden Verfahrens 6 bzw. eines Klassifizierungsalgorithmus 6 wie z.B. eines neuronalen Netzes zur Klassifizierung. Die Recheneinheit 3 ist entweder wie in Fig. 2 dargestellt, direkt im System 2 (auch als Automatisierungssystem 2 bezeichenbar) oder in einer Cloudlösung (z.B. als Mindsphere App) an das System (zum Beispiel ein Supervisory Control and Data Acquisition (SCADA) System 2) bzw. die Beobachtungswerte 5 angekoppelt.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Automatisiertes Verfahren zur Ermittlung von Kalibrierungswerten (7) für Parameter eines Simulationsmodells einer Abwasserbehandlungsanlage (1), mit den Schritten:
- Bereitstellen von Anfangswerten der Parameter (8), wobei die Anfangswerte der Parameter (8) diskrete Werte sind und jeweils eine obere Schranke und eine untere Schranke aufweisen,
- Bestimmen von diskreten Simulationszeitreihen (9) durch das Simulationsmodell für Parameterkombinationen (81) über eine vorgebbare Zeitspanne (T), wobei die Parameterkombinationen (81) Kombinationen der Anfangswerte der Parameter (8) darstellen,
- Trainieren eines Klassifikationsalgorithmus (6) mit den Simulationszeitreihen (9) und den zugehörigen Parameterkombinationen (81) derart, dass unbekannte Simulationszeitreihen (9) bekannten Parameterkombinationen (81) zuordenbar sind,
- Messen von Beobachtungswerten (5) über die Zeitspanne (T),
- Eingabe der Beobachtungszeitreihe (51) in den trainierten Klassifikationsalgorithmus (61), und
- Ermittlung einer zu der Beobachtungszeitreihe (51) passenden Parameterkombination (81) als Kalibrierungswerte (7) für die Parameter des Simulationsmodells durch den trainierten Klassifikationsalgorithmus (61).

2. Automatisiertes Verfahren nach Anspruch 1,
wobei die Parameter (8) Stoffkonzentrationen und/ oder Reaktionsgeschwindigkeiten und/ oder Verläufe von Stoffzufuhren in der Abwasserbehandlungsanlage (1) sind.

3. Automatisiertes Verfahren nach einem der vorherigen Ansprüche,
wobei einer Parameterkombination (81) mehrere korrespondierenden Simulationszeitreihen (9) zugewiesen werden, welche im Bereich eines Systemrauschens voneinander abweichen.

4. Automatisiertes Verfahren nach einem der vorherigen Ansprüche, wobei jede Parameterkombination (81), jeden Anfangsparameter (8) genau einmal aufweist.

5. Automatisiertes Verfahren nach einem der vorherigen Ansprüche, **dadurch gekennzeichnet,**
**dass** das Simulationsmodell ein Activated Sludge Model (ASM) ist sowie Massenbilanzen und/ oder ein hydraulisches Modell für einen Wassertransport enthält.

6. Automatisiertes Verfahren nach einem der vorherigen Ansprüche, **dadurch gekennzeichnet,**
**dass** der Klassifikationsalgorithmus (6) als neuronales Netz ausgebildet ist.

7. System (2) aufweisend eine Recheneinheit (3), wobei die Recheneinheit (3) ausgebildet ist, ein Verfahren nach einem der vorhergehenden Ansprüche auszuführen.

8. System (2) nach Anspruch 7, **dadurch gekennzeichnet,**
**dass** die Recheneinheit (3) in einer Cloud ausgebildet ist.

9. System (2) nach Anspruch 7 oder 8, **gekennzeichnet durch**, mindestens eine Sensoreinheit (4), die ausgebildet ist, Beobachtungswerte (5) zu ermitteln.

10. Computerprogrammprodukt, umfassend ein Computerprogramm, wobei das Computerprogramm in eine Speichereinrichtung einer Recheneinheit ladbar ist, wobei mit dem Computerprogramm die Schritte eines Verfahrens nach einem der Ansprüche 1 bis 6 ausgeführt werden, wenn das Computerprogramm auf der Recheneinheit ausgeführt wird.

11. Computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines Verfahrens nach einem der Ansprüche 1 bis 6 ausgeführt werden, wenn das Computerprogramm auf der Recheneinheit ausgeführt wird.
